# EUROPEAN PATENT APPLICATION

(11) **EP 4 596 080 A1**
(43) Date of publication of application: **06.08.2025**
(21) Application number: 25155068.7
(22) Date of filing: 30.01.2025
(51) Int. Cl.: B01D 45/16, B64D 13/06

(54) **MID-PRESSURE WATER SEPARATION FOR ENVIRONMENTAL CONTROL SYSTEM**

(30) Priority: 02.02.2024 US 202418430854
(71) Applicant: Hamilton Sundstrand Corporation, Charlotte, NC 28217-4578 (US)
(72) Inventor: KRAUTH, Kayla, Weatogue, CT, 06089 (US); IWASINSKI, Miles, Chicopee, MA, 01020 (US); COLSON, Darryl, West Suffield, 06093 (US); BRUNO, Louis J., Ellington, 06029 (US); TAING, Thomas, Enfield, CT, 06082 (US)
(74) Representative: Dehns

(57) **Abstract**

A water separator (32) for use in an environmental control system (20) of an aircraft including an outer housing (41) having an upstream end (42), a downstream end (44), and a central longitudinal axis (X). A plurality of vanes (46) are arranged within the outer housing and are spaced about the central longitudinal axis. A plurality of flow channels (48) are formed between the plurality of vanes and the outer housing. The plurality of flow channels have a spiral-like configuration about the central longitudinal axis. At least one ring vane (70) is arranged within the outer housing and extends parallel to the longitudinal axis.

## Description

### BACKGROUND

Embodiments of the present disclosure relate to environmental control systems for a vehicle, and more particularly, to a water separator suitable for use in an environmental control system of an aircraft.

In existing environmental control systems, an air flow is typically cooled within a heat exchanger then provided to a water collector located downstream from the heat exchanger to capture or remove any free moisture from the airflow. The water collector typically includes a separation device that directs the moisture present within the airflow to outer walls of the separation device and directs the free moisture towards a drain port. Often times the heat exchanger and the water collector are substantially bulky and consume large amounts of space.

### BRIEF DESCRIPTION

According to an embodiment, a water separator for use in an environmental control system of an aircraft including an outer housing having an upstream end, a downstream end, and a central longitudinal axis. A plurality of vanes are arranged within the outer housing and are spaced about the central longitudinal axis. A plurality of flow channels are formed between the plurality of vanes and the outer housing. The plurality of flow channels have a spiral-like configuration about the central longitudinal axis. At least one ring vane is arranged within the outer housing and extends parallel to the longitudinal axis.

In addition to one or more of the features described above, or as an alternative to any of the foregoing embodiments the at least one ring vane includes a plurality of ring vanes and an origin of each of the plurality of ring vanes is arranged at the longitudinal axis.

In addition to one or more of the features described above, or as an alternative to any of the foregoing embodiments the plurality of ring vanes are equidistantly spaced within the outer housing.

In addition to one or more of the features described above, or as an alternative to any of the foregoing embodiments an axial length of each of plurality of ring vanes varies.

In addition to one or more of the features described above, or as an alternative to any of the foregoing embodiments an axial length of the plurality of rings increases as a radius of each of the plurality of rings increases.

In addition to one or more of the features described above, or as an alternative to any of the foregoing embodiments the at least one ring vane is integrally formed with the plurality of vanes.

In addition to one or more of the features described above, or as an alternative to any of the foregoing embodiments the at least one ring vane subdivides the plurality of flow channels.

In addition to one or more of the features described above, or as an alternative to any of the foregoing embodiments each of the plurality of vanes has a major surface. The major surface is arranged at an angle relative to the central longitudinal axis.

In addition to one or more of the features described above, or as an alternative to any of the foregoing embodiments each of the plurality of vanes is identical.

In addition to one or more of the features described above, or as an alternative to any of the foregoing embodiments each of the plurality of vanes has a twist angle formed between the inlet end and the outlet end. The twist angle of each of the plurality of vanes is identical.

In addition to one or more of the features described above, or as an alternative to any of the foregoing embodiment the twist angle of the plurality of vanes is at least 90°.

In addition to one or more of the features described above, or as an alternative to any of the foregoing embodiments the twist angle of the plurality of vanes is at least 180°.

In addition to one or more of the features described above, or as an alternative to any of the foregoing embodiments a direction of twist of the spiral-like configuration about the central longitudinal axis and a direction of a spin of a flow of medium provided to the upstream end of the outer housing is the same.

In addition to one or more of the features described above, or as an alternative to any of the foregoing embodiments a direction of twist of the spiral-like configuration about the central longitudinal axis and a direction of a spin of a flow of medium provided to the upstream end of the outer housing is different.

In addition to one or more of the features described above, or as an alternative to any of the foregoing embodiments an axial length of each the plurality of vanes varies between the interior edge and the exterior edge proximate the downstream end of the outer housing.

In addition to one or more of the features described above, or as an alternative to any of the foregoing embodiments an axial length of each the plurality of vanes varies linearly between the interior edge and the exterior edge proximate the downstream end of the outer housing.

In addition to one or more of the features described above, or as an alternative to any of the foregoing embodiments an axial length of each the plurality of vanes varies non-uniformly between the interior edge and the exterior edge proximate the downstream end of the outer housing.

In addition to one or more of the features described above, or as an alternative to any of the foregoing embodiments the axial length of each of the plurality of vanes increases from the interior edge toward the exterior edge proximate the downstream end of the outer housing.

In addition to one or more of the features described above, or as an alternative to any of the foregoing embodiments the water separator is removably mounted within the duct.

In addition to one or more of the features described above, or as an alternative to any of the foregoing embodiments the water separator is integrally formed with the duct.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system according to an embodiment;
FIG. 2 is a perspective view of a water extractor according to an embodiment;
FIG. 3 is a front perspective view of a water extractor according to an embodiment;
FIG. 4 is a rear perspective view of the water extractor of FIG. 3 according to an embodiment;
FIG. 5 is a cross-sectional view of the water extractor of FIG. 3 taken along the central longitudinal according to an embodiment.

### DETAILED DESCRIPTION

A detailed description of one or more embodiments of the disclosed apparatus and method are presented herein by way of exemplification and not limitation with reference to the Figures.

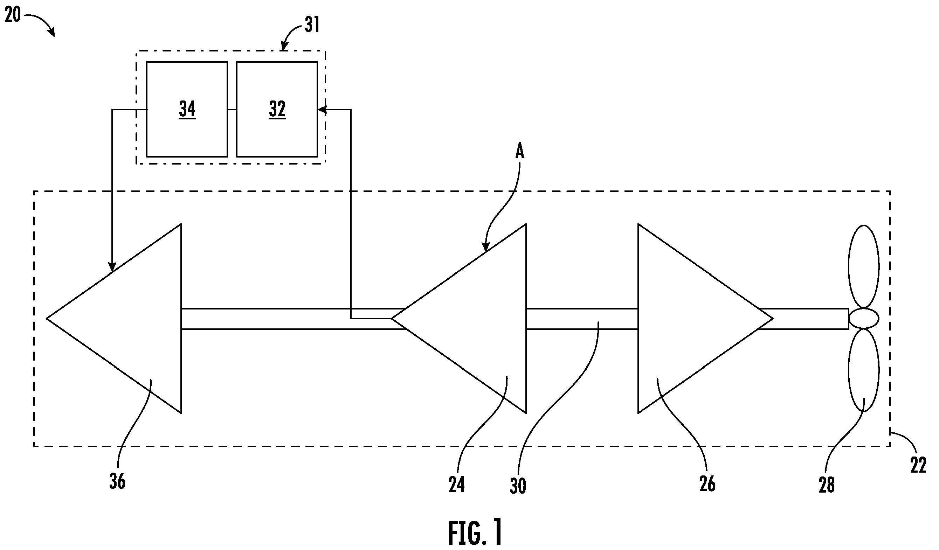

With reference now to the FIG. 1, an exemplary portion of an environmental control system 20, such as part of a pack of an environmental control system for example, is illustrated. As shown, the environmental control system (ECS) 20 includes an air cycle machine 22 having a turbine 24, and in some embodiments includes one or more other components, such as a compressor 26 and a fan 28 operably coupled to the turbine 24 by a rotatable shaft 30 for example. In an embodiment, the same flow of medium is provided to the compressor 26 and the turbine 24 in series. Accordingly, the medium may be at its highest pressure when output from the compressor 26 until reaching the inlet of the turbine 24 and may be a medium or mid-pressure when output from the outlet of the turbine 24.

In the illustrated, non-limiting embodiment, a water extractor 31 is arranged directly downstream from the outlet of the turbine 24, such as when the medium is at a middle pressure. As shown, the water extractor 31 may include a water separator 32 and a water collector 34 arranged in series relative to a flow of medium, with the water collector being arranged downstream form the water separator 32. The water separator 32 may be used to remove moisture, such as water for example, from the medium and the water collector 34 is operable to collect the removed moisture such that the medium output from the water collector 34 is drier than the medium provided to the water separator 32. Although the water separator 32 and the water collector 34 are schematically illustrated as separate components, it should be appreciated that embodiments where the two are integrally formed are within the scope of the disclosure. In the illustrated, non-limiting embodiment, the cool, dry medium output from the water collector 34 is provided to a second turbine 36. Although the second turbine 36 is illustrated as being arranged directly downstream from the water collector 34, it should be appreciated that in other embodiments, one or more additional components may be arranged between the outlet of the water collector 34 and the second turbine 36. Further, although the turbine 36 is illustrated as being part of the air cycle machine 22, embodiments where the turbine 36 is separate from the air cycle machine 22 are also within the scope of the disclosure.

It should be appreciated that the configuration of a portion of the environmental control system 20 described herein is intended as an example only and that an environmental control system having any suitable configuration is within the scope of the disclosure. Further, it should be understood that embodiments where the water separator 32 and water collector 34, in combination, are arranged downstream from any suitable component of the ECS 20 are also contemplated herein. In an embodiment, the water separator 32 is positioned within the ECS 20 to receive a flow of medium, such as a fluid or air A for example, that is cool and has condensed water vapor entrained or suspended therein resulting in a fog-like consistency.

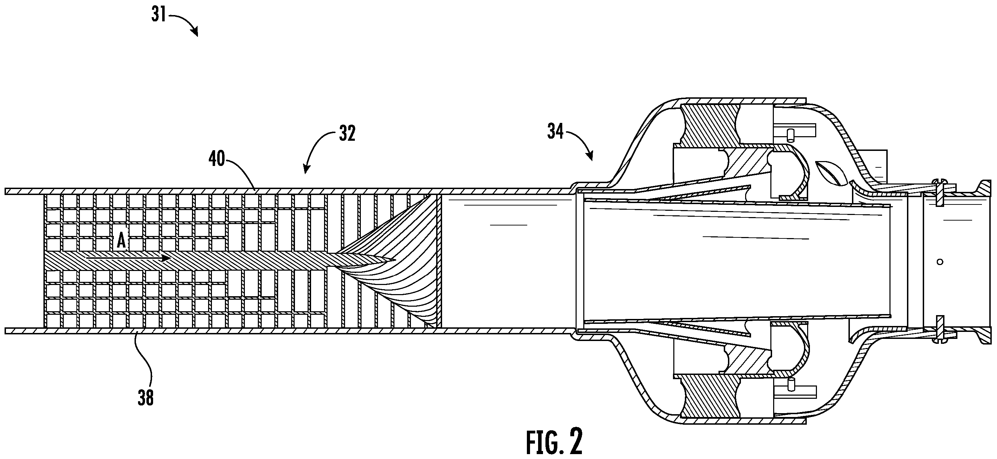

With reference now to FIG. 2, an example of water extractor 31 suitable for use in an ECS 20 is illustrated in more detail. In the illustrated, non-limiting embodiment, the water separator 32 includes an insert 40 positionable within a duct or conduit 38 connected to a component of an environmental control system. The insert 40 may be arranged within the duct 38 at any suitable location, such as downstream from an outlet of the turbine 24 and upstream from the inlet of the water collector 34. In embodiments where the water separator 32 includes an insert, the insert 40 may be permanently or removably mountable within the interior of the duct 38, and/or to a portion of the turbine 24. Alternatively, the insert 40 may be integrally formed with the duct 38 or the outlet of the turbine 24, such as via an additive manufacturing process for example. It should be appreciated that in some embodiments, the insert 40 is the water separator 32.

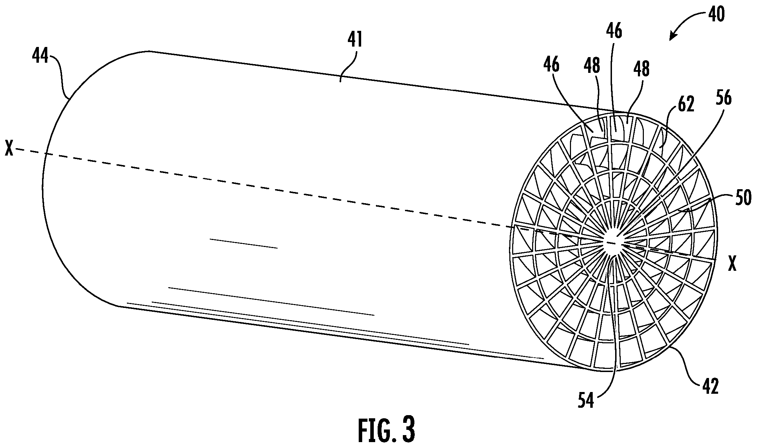

An exemplary insert 40 of a water separator 32 is illustrated in more detail in FIGS. 3-5. As shown, the insert 40 has a body including an outer housing 41. Although the outer housing 41 is illustrated as being cylindrical in shape, it should be understood that embodiments where a cross-section of the outer housing 41 is a shape other than a circle, such as a square, rectangle, triangle, or other suitable shape are also contemplated herein. In an embodiment, the shape and size of at least a portion of the outer housing 41 is complementary to or substantially identical to the interior surface of the duct 38. For example, an outer diameter of the first upstream end 42 of the outer housing 41 may be substantially equal to the inner diameter of the duct 38 and/or an outer diameter of the second downstream end 44 of the outer housing 41 may be substantially equal to the inner diameter of the duct 38. Accordingly, when the insert 40 is arranged at an interior of the duct 38, a minimal amount of the medium, and in some embodiments, none of the medium, is configured to flow between the exterior of the insert 40 and the interior surface of the duct 38.

The insert 40 additionally includes at least one vane 46 mounted within the interior of the outer housing 41. In some embodiments, the at least one vane 46 includes a plurality of vanes mounted within the hollow interior of the outer housing 41. In such embodiments, the plurality of vanes 46 may be distinct from one another and may but need not be identical in size and/or shape. Further, it should be appreciated that the vanes 46 may be any suitable shape. In embodiments including a plurality of vanes 46, adjacent vanes may be separated or spaced apart from one another. For example, the vanes 46 may be spaced peripherally about a central longitudinal axis X of the outer housing 41. Accordingly, a flow channel 48 may be defined between a pair of adjacent vanes 46. In the illustrated, non-limiting embodiment, the insert 40 includes thirty-two vanes 46. However, the insert 40 may include any suitable number of vanes. The total number of vanes 46 may be selected based on one or more of the following: the overall size of the vane 46 and the orientation of the vane 46 relative to the longitudinal axis X of the outer housing 41.

The at least one or plurality of vanes 46 may extend over the entire axial length of the outer housing 41 or may extend over only a portion thereof. In an embodiment, each of the plurality of vanes 46 generally has a first upstream end 50 arranged at or proximate to the first end 42 of the outer housing 41 and an opposite second, outlet end 52 arranged at or proximate to a second opposite end 44 of the outer housing 41. The first end 50 of each of the vanes 46 may be coplanar. In the illustrated, non-limiting embodiment, a first, interior edge 54 of each of the plurality of vanes 46 is arranged near a center of the outer housing 41.

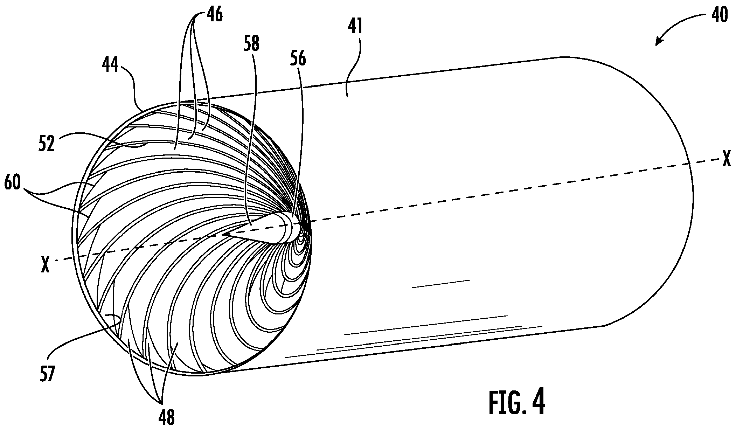

In the illustrated, non-limiting embodiment, a center body 56 is arranged coaxially with the longitudinal axis X and the interior edge 54 of at least one, and in some embodiments, of each of the plurality of vanes 46 is arranged in contact the center body. For example, the interior edge 54 of one or more of the vanes 46 is configured to contact, and may be integrally formed with, an outer periphery of the center body 56. The center body 56 may extend over an entire axial length of the outer housing 41, or over only a portion thereof, and/or may extend over the entire axial length of the vanes 46 or over only a portion thereof. In an embodiment, as shown in FIG. 3, the center body 56 may have a generally cylindrical shape. Further, in some embodiments, an end 58 of the center body 56 positioned adjacent to the outlet end 52 of the vanes 46 may have a tapered or conical shape, as shown in FIG. 4. In other embodiments, the insert 40 may not include a center body 56. In such embodiments, the interior edge 54 of one or more of the vanes 46 may be offset from the central longitudinal axis X such that a hollow channel is defined at the center of the outer housing 41 by the interior edge 54 of the plurality of vanes 46.

A second opposite, exterior edge 60 is positioned adjacent to and may be in contact with an interior surface 57 of the outer housing 41. In some embodiments, a contour of the second exterior edge 60 of the vanes 46, such as a curvature thereof for example, is generally complementary to a corresponding contour of the interior surface 57 of the outer housing 41. In such embodiments, the exterior edge 60 of each vane 46 may be arranged in contact with the interior surface 57 of the outer housing 41 over a substantial entirety of the vane 46.

Each of the plurality of vanes 46 has a first major surface 62 extending between the interior edge 54 and the exterior edge 60 thereof, and. In the illustrated, non-limiting embodiment, the first major surface 62 of one or more of the plurality of vanes 46 is oriented at a non-perpendicular angle and a non-parallel angle relative to a longitudinal axis X of the insert 40. Accordingly, such a vane 46 is configured to twist about the central longitudinal axis X of the outer housing 41 resulting in a helical or spiral-like configuration. In the illustrated, non-limiting embodiment, the angle of the first major surface 62 relative to the longitudinal axis X of each of the plurality of vanes 46 is substantially identical. However, embodiments where the angle varies between vanes 46 are also within the scope of the disclosure. Further, it should be appreciated that the angle of the first major surface 62 of a vane 46 may be constant over the axial length of the vane 46 or alternatively, may vary. In embodiments where the plurality of vanes 46 twist about the central longitudinal axis X within the outer housing 41, the flow channels 48 formed between the vanes 46 will have a similar spiral configuration that wraps about the central longitudinal axis X within the outer housing 41.

The axial length over which a vane 46 can complete a full 360 degree turn about the axis X, also referred to herein as a twist rate, is dependent on the angle of the first major surface 62 of the vane 46 relative to the longitudinal axis X and may be selected based on the requirements of the application in which the water separator 32 is being used. In an embodiment, at least one, and in some embodiments each, of the plurality of vanes 46 of the water separator 32 have a twist rate equal to about 1 twist per 9" of axial length. However, any suitable twist rate is contemplated herein. Further, it should be understood that embodiments where the twist rate of a vane 46 changes over the axial length of the vane 46 are also within the scope of the disclosure. For example, in an embodiment, the twist rate of a vane 46 may gradually increase over the axial length of the vane 46.

In an embodiment, as a medium passes through the flow channels 48 of the insert 40, a swirl is imparted to the medium. For example, as a vane 46 spirals about the longitudinal axis X over the axial length of the insert 40, the flow of medium A within an adjacent flow channel 48 is configured to spin or swirl about the longitudinal axis X. The vanes 46, and therefore the plurality of flow channels 48, may twist about the longitudinal axis X any suitable amount between the upstream or inlet end 50 and the downstream or outlet end 52. The total twist defined between an inlet of a flow channel 48 and an outlet of a corresponding flow channel 48 about the longitudinal axis X will depend on the twist rate of the vane 46 and the axial length of the insert 40. For example, the flow channels 48 may have a twist angle of at least 90 degrees. Further, embodiments where the vanes 46 and/or flow channels 48 have a twist angle greater than 90 degrees, such as up to 180 degrees, up to 270 degrees, up to 360 degrees, up to 720 degrees or more are also contemplated herein. Further, embodiments where the twist angle is greater than 0 and less than 90 degrees are also within the scope of the disclosure.

The direction of twist or spiral of the vane 46 and/or at least one flow channel 43 may be the same as the direction of the spin acting on the medium A output from the turbine 24, or alternatively, may be opposite the direction of the spin acting on the medium A output from the turbine 24.

In an embodiment, the insert 40 additionally includes at least one ring vane 70, and in some embodiments a plurality of ring vanes 70. Each of the ring vanes 70 has a circular cross-section and is positioned such that an origin or center of the circular cross-section is arranged at the longitudinal axis X. Accordingly, in embodiments including multiple ring vanes 70, the ring vanes 70 are mounted concentrically with one another. Although three ring vanes 70 are illustrated as being positioned between the center body 56 and the outer housing 41, embodiments having any number of ring vanes 70, such as a single ring vane, two ring vanes, or more than four ring vanes are contemplated herein. In the illustrated, non-limiting embodiment, the radial distance between each pair of adjacent ring vanes 70 is generally equal. Said another way, the ring vanes 70 may be generally equidistantly spaced between the center body 56 and the outer housing 41.

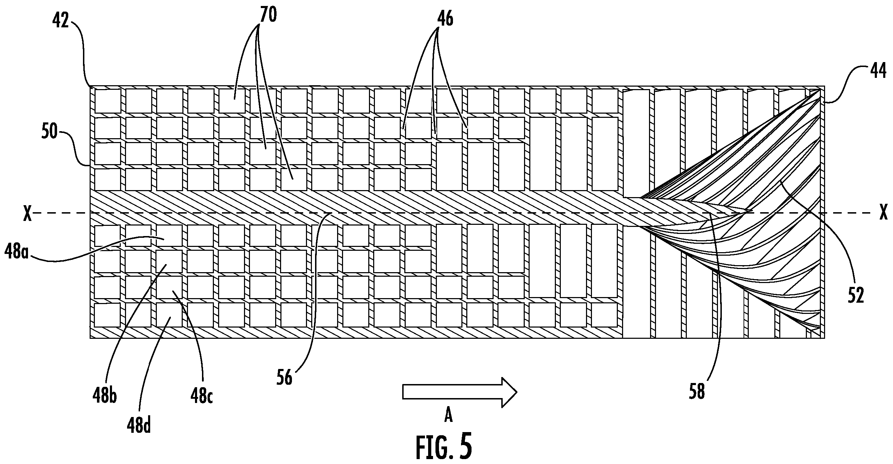

The ring vanes 70 are configured to extend axially over at least a portion of the length of the insert 40. Accordingly, the ring vanes 70 extend axially through the flow channels 48 defined between adjacent vanes 46 such that each flow channel 48 is subdivided into a plurality of smaller flow channels 48a, 48b, 48c. The ring vanes 70 may but need not be integrally formed with the vanes 46. In an embodiment, the axial length of the ring vanes 70 is less than or equal to an axial length of a vane 46 at that location position. The axial length of one or more of the plurality of ring vanes 70 may be substantially identical. In other embodiments, such as shown in FIG. 5, the axial length of each ring vanes 70 may vary. As shown, the axial length of the ring vanes 70 may increase as the radius of the ring vane 70 increases. Accordingly, in such embodiments, the ring vane 70 positioned closest to the center of the outer housing 41 may have the shortest axial length and the ring vane 70 positioned closest to the outer housing 41 may have the longest axial length.

In operation, as the flow of medium A output from a component, such as the turbine outlet of turbine 24 for example, passes through the plurality of flow channels 48 of the insert 40 in parallel, moisture within the flow of medium A will coalesce in the form of droplets on the surfaces of the flow channel 48, such as on the first major surface 62 of a vane 46, the interior surface 57 of the outer housing 41, and the adjacent surfaces of the ring vanes 70 for example. During this coalescing, the flow of medium A will cause these droplets formed on the surfaces 62, 57, and the surface of the ring vanes 70 to move through the flow channels 48 and into the water collector 34 positioned directly downstream from the water separator 32. The water collector 34 may further separate a flow of medium A having water entrained therein from a central drier flow of medium as is known in the art.

With continued reference to FIGS. 3-5, in an embodiment, a cutout is formed in one or more of the plurality of vanes 46, such as at or near the second end 44 of the insert 40. As a result, an axial length of one or more of the plurality of vanes 46 may vary between the interior edge 54 and the exterior edge 60 proximate the downstream end 44 of the outer housing 41. In an embodiment, best shown in FIG. 5, a cut extends from the interior edge 54 towards the exterior edge 60 such that an axial length of the vane 46 increases in a direction perpendicular to the longitudinal axis X, near the second end 52 of the vane 46. This cut may be uniform or symmetrical in each of the plurality of vanes 46 spaced about the longitudinal axis X. In the illustrated, non-limiting embodiment, an identical straight, linear cut is formed in each of the plurality of the vanes 46. The resulting cutout formed in the plurality of vanes 46, in combination, has a triangular, conical, or frustoconical shape (see FIG. 5). However, embodiments where the cut has a non-linear configuration, such as where the cut has a curved or arcuate configuration for example, are also within the scope of the disclosure. The axial length over which the cutout extends may be determined by the angle of the cut. Inclusion of such a cutout at or near the second end 52 of the vanes 46 may encourage movement of the coalesced droplets on the first major surface 62 of a vane 46, such as near the interior edge 54 thereof, toward the interior surface 57 of the outer housing 41.

A water separator 32 including a coalescing insert 40 as illustrated and described herein facilitates, and in some embodiments maximizes, the separation of water from a flow of medium A, such as an airflow for example, within a small sizing envelope. The water separator 32 may be particularly useful for removing water from a flow of medium A when the water is in the form or a mist or fog, such as may be received from an outlet of a turbine. Further, by using the water separator 32 in an ECS 20 having two turbines 24, 36 arranged in series relative to the flow of medium A, the first turbine 24 may be configured to maintain the temperature of the medium A above freezing, whereas the second turbine 36 may be configured to achieve a necessary pressure and/or temperature of the medium to be provided to a load.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A water separator (32) for use in an environmental control system (20) of an aircraft comprising:
an outer housing (41) having an upstream end (42), a downstream end (44), and a central longitudinal axis (X);
a plurality of vanes (46) arranged within the outer housing and spaced about the central longitudinal axis;
a plurality of flow channels (48) formed between the plurality of vanes and the outer housing, the plurality of flow channels having a spiral-like configuration about the central longitudinal axis; and
at least one ring vane (70) arranged within the outer housing, the at least one ring vane extending parallel to the longitudinal axis.

2. The water separator of claim 1, wherein the at least one ring vane (70) includes a plurality of ring vanes and an origin of each of the plurality of ring vanes is arranged at the longitudinal axis (X).

3. The water separator of claim 2, wherein the plurality of ring vanes (70) are equidistantly spaced within the outer housing (41).

4. The water separator of claim 2 or 3, wherein an axial length of each of plurality of ring vanes (70) varies; and optionally wherein an axial length of the plurality of rings increases as a radius of each of the plurality of rings increases.

5. The water separator of any preceding claim, wherein the at least one ring vane (70) is integrally formed with the plurality of vanes (46).

6. The water separator of any preceding claim, wherein the at least one ring vane (70) subdivides the plurality of flow channels (48).

7. The water separator of any preceding claim, wherein each of the plurality of vanes (46) has a major surface (62), the major surface being arranged at an angle relative to the central longitudinal axis (X).

8. The water separator of any preceding claim, wherein each of the plurality of vanes (46) is identical.

9. The water separator of any preceding claim, wherein each of the plurality of vanes (46) has a twist angle formed between the inlet end (42) and the outlet end (44), the twist angle of each of the plurality of vanes being identical.

10. The water separator of claim 9, wherein the twist angle of the plurality of vanes (46) is at least 90°; or wherein the twist angle of the plurality of vanes is at least 180°.

11. The water separator of any preceding claim, wherein a direction of twist of the spiral-like configuration about the central longitudinal axis (X) and a direction of a spin of a flow of medium provided to the upstream end (42) of the outer housing (44) is the same; or wherein a direction of twist of the spiral-like configuration about the central longitudinal axis and a direction of a spin of a flow of medium provided to the upstream end of the outer housing is different.

12. The water separator of any preceding claim, wherein an axial length of each the plurality of vanes (46) varies between the interior edge and the exterior edge proximate the downstream end of the outer housing.

13. The water separator of claim 12, wherein an axial length of each the plurality of vanes (46) varies linearly between the interior edge and the exterior edge proximate the downstream end (44) of the outer housing (41).

14. The water separator of claim 12 or 13, wherein an axial length of each the plurality of vanes (46) varies non-uniformly between the interior edge and the exterior edge proximate the downstream end (44) of the outer housing (41); or wherein the axial length of each of the plurality of vanes increases from the interior edge toward the exterior edge proximate the downstream end of the outer housing.

15. The water separator of any preceding claim, further comprising a duct (38), the water separator (32) being removably mounted within the duct; or the water separator being integrally formed with the duct.
